Europäisches Patentamt

European Patent Office

Office européen des brevets

(19)

(11) Veröffentlichungsnummer: **0 071 786**
**A1**

(12) # EUROPÄISCHE PATENTANMELDUNG

(21) Anmeldenummer: 82106323.7

(22) Anmeldetag: 15.07.82

(51) Int. Cl.³: **C 08 L 35/06**

(30) Priorität: 04.08.81 DE 3130773

(43) Veröffentlichungstag der Anmeldung: 16.02.83
Patentblatt 83/7

(84) Benannte Vertragsstaaten: **BE DE FR GB NL**

(71) Anmelder: **BASF Aktiengesellschaft,
Carl-Bosch-Strasse 38, D-6700 Ludwigshafen (DE)**

(72) Erfinder: **Hambrecht, Juergen, Dr., Werderstrasse 30,
D-6900 Heidelberg (DE)**
Erfinder: **McKee, Graham Edmund, Dr., Kastanienweg 8,
D-6940 Weinheim (DE)**
Erfinder: **Brandstetter, Franz, Dr., Ritterbuechel 45,
D-6730 Neustadt (DE)**
Erfinder: **Echte, Adolf, Dr., Leuschnerstrasse 42,
D-6700 Ludwigshafen (DE)**
Erfinder: **Jung, Rudolf, H., Dr., Liebenauer Strasse 132,
D-6520 Worms (DE)**
Erfinder: **Scharf, Bernhard, Dr., Branichstrasse 3,
D-6905 Schriesheim (DE)**

(54) **Thermoplastische Formmasse.**

(57) Die Erfindung betrifft thermoplastische Formmassen, enthaltend ein Gemisch aus 50 bis 95 Gew.-% eines Copolymerisates A,
aufgebaut aus:
einem monovinylaromatischen Monomeren $a_1$),
einem ungesättigten Dicarbonsäureanhydrid $a_2$),
gegebenenfalls enthaltend
ein acrylisch ungesättigtes Monomeres $a_3$),
5 bis 50 Gew.-% eines Pfropfmischpolymerisates B,
aufgebaut aus:
einem Kautschuk $b_1$), der eine Glastemperatur, TG, von unterhalb 0 °C aufweist,
mindestens einem monovinylaromatischen Monomeren $b_2$)
und
0,1 bis 25 Gew.-Teilen mindestens eines (Methacrylsäureesters und/oder Acrylnitril, $b_3$), wobei für die Gewichtsanteile der die Hartmatrix aufbauenden Monomeren gilt

$$| (a_2 + a_3) | - | b_3 | \leq 4$$

Die Herstellung der erfindungsgemäßen Formmassen erfolgt durch Vereinigen der Schmelze der Komponente A mit der Komponente B. Die erfindungsgemäßen Formmassen werden zur Herstellung von Formteilen verwendet.

## Thermoplastische Formmasse

Die Erfindung betrifft eine schlagfeste und wärmeformbeständige thermoplastische Formmasse, die aus einem Copolymerisat A und einem Pfropfmischpolymerisat B aufgebaut ist. Das Copolymerisat A enthält überwiegend ein monvinylaromatisches Monomeres, Maleinsäureanhydrid und kann gegebenenfalls noch Acrylnitril und/oder Methacrylsäuremethylester enthalten. Das Pfropfmischpolymerisat B enthält ein vinylaromatisches Monomeres und Acrylnitril oder (Meth)acrylsäureester, jeweils gepfropft auf eine Kautschukgrundlage, die eine Glastemperatur unterhalb von 0°C aufweist.

Zum Stand der Technik nennen wir:

(1)   DE-OS 22 46 726
(2)   US-PS 3 641 212 und
(3)   DE-OS 19 49 487.

Copolymerisate aus Styrol und Acrylnitril sind bekannt. Sie lassen sich gut thermoplastisch verarbeiten, sind ziemlich hart und weisen im Vergleich zu reinem Polystyrol eine hervorragende Lösungsmittelbeständigkeit auf. Ihre Zähigkeit läßt jedoch sehr zu wünschen übrig. Es ist bekannt, daß man die Schlagzähigkeit von harten Styrol-Acrylnitril-Copolymerisaten verbessern kann, wenn man sie mit einer weichen kautschukelastischen Komponente abmischt. Solche Weichkomponenten können hergestellt worden sein durch Polymerisation eines Gemisches von Styrol und Acrylnitril in Gegenwart eines Kautschuks, wobei zumindest ein Teil der Monomeren auf den Kautschuk gepfropft ist. Diese Formmassen weisen eine zufriedenstellende Schlagzähigkeit auf, sie haben jedoch den Nachteil, daß sie bei Erwärmen auf Temperaturen von etwa 100°C und darüber ihre Form verändern und

Vo/P

0071786

schrumpfen: d.h., sie haben eine geringe Wärmeformbeständigkeit.

Copolymerisate aus Styrol und Maleinsäureanhydrid sind ebenfalls bekannt. Sie beginnen erst bei relativ hohen Temperaturen zu erweichen und ihre Form zu verändern. Ihre mechanischen Eigenschaften, wie Steifigkeit und Zähigkeit sind jedoch unbefriedigend. Es ist weiter bekannt, daß einige wenige thermoplastische Kunststoffe miteinander mischbar sind; die weitaus größte Zahl der Kunststoffe erweisen sich jedoch als unverträglich, wenn man versucht, aus zwei oder mehreren Komponenten Mischungen herzustellen: Unverträglichkeit ist die Regel und Mischbarkeit ist die Ausnahme vgl. z.B. L. Bohn, Kolloid-Zeitschrift 213, (1966), Seite 55 oder G.E. Molau, Journal of Polymer Science, Teil B, 3, (1965) Seite 1007 oder B.J. Schmitt, Angew. Chem. 91, (1979) 296. Verträglichkeit ist aber Voraussetzung dafür, daß Kunststoffmischungen brauchbare Eigenschaften haben: Wenn die Komponenten einer Kunststoffmischung unverträglich sind, stellen die Phasengrenzen Keimstellen für Bruch dar.

Schlagzähe und zugleich hochwärmeformbeständige thermoplastische Formmassen auf Basis von Styrol-Maleinsäureanhydrid-Copolymerisaten sind verschiedentlich beschrieben worden.

Das Verträglichkeitsproblem von Matrixmaterial und Pfropfhülle des Kautschuks wird in (1) durch eine kontinuierliche Polymerisation von Styrol und Maleinsäureanhydrid in Gegenwart von Polybutadien erreicht. Aufgrund der hohen Zähigkeit der Polymermasse, auch bei niedrigen Umsätzen, lassen sich in der Praxis jedoch nur relativ kautschukarme Produkte herstellen, die nur unbefriedigende Eigenschaften aufweisen. Bestimmte Kautschuke, wie Polyacrylsäureester, können als Pfropfgrundlage nur mit Schwierigkeiten eingesetzt werden.

In (2) wird die Abmischung von ungepfropftem Nitrilkautschuk mit S-MSA-Co- und Terpolymeren beschrieben. Die resultierenden Produkte besitzen jedoch aufgrund ungenügender Verankerung des Kautschuks in den Matrixpolymeren unbefriedigende mechanische Eigenschaften.

In (3) werden Mischungen aus Styrol-Maleinsäureanhydrid-Copolymeren und Pfropfkautschuken auf Basis von Polybutadien, Butadien-Acrylsäureester-Mischpolymeren und Polyacrylsäureestern und gegebenenfalls SAN-Copolymeren beschrieben, deren mechanische Eigenschaften jedoch gegenüber herkömmlichen ABS-Polymerisaten deutlich abfallen.

Der Erfindung lag deshalb die Aufgabe zugrunde, schlagfeste thermoplastische Formmassen auf Basis von S-MSA-Copolymeren und Kautschuken mit Glastemperaturen $0^{o}C$ mit ABS-vergleichbaren mechanischen Eigenschaften herzustellen.

Die Lösung dieser Aufgabe gelingt durch die in Patentanspruch 1 genannten Maßnahmen.

Nachstehend werden die Komponenten der erfindungsgemäßen Formmasse, deren Herstellung und die Herstellung der Formmasse beschrieben.

Komponente A

Die Komponente A der erfindungsgemäßen Formmasse wird durch kontinuierliche Mischpolymerisation der Monomeren $a_1$), $a_2$) und gegebenenfalls $a_3$) bei hohen Temperaturen unter starkem Rühren hergestellt. Die Monomeren $a_1$) und $a_2$) werden kontinuierlich in ein Polymerisationsgefäß eingebracht und gleichzeitig wird eine diesen Mengen entsprechende Menge des Polymerisationsgemisches aus dem Gefäß abgezogen (vgl. A.W. Hanson, R.L. Zimmermann, Industrial Eng. Chemistry 49, (1957) Seite 803. Die Komponente A ist verantwortlich für die gute Wärmeformbeständigkeit der erfindungsgemäßen Formmasse und ist in einem Anteil von 50 bis 95 Gew.%, bevorzugt 60 bis 90 Gew.%, jeweils bezogen auf die Komponenten A und B, vorhanden.

Als monovinylaromatische Monomere $a_1$) kommen Styrol, $\alpha$-Methylstyrol oder kernalkylierte Styrole mit bis zu 12 Kohlenstoffatomen in Frage. Als Monomeres $a_2$) wird Maleinsäureanhydrid angewendet und als Monomere vom Typ $a_3$) sind vor allem Acrylnitril und (Meth)acrylsäureester von $C_1$ bis $C_8$-Alkanolen am Aufbau beteiligt. Zum Aufbau der Komponente A der erfindungsgemäßen Formmasse werden 65 bis 95 Gew.-Teile des monovinylaromatischen Monomeren, vorzugsweise 75 bis 92 Gew.-Teile, angewendet. Vom Monomeren $a_2$) werden 5 bis 35 Gew.-Teile, insbesondere 8 bis 25 Gew.-Teile, verwendet. Das Monomere $a_3$) ist nur gegebenenfalls in der Formmasse enthalten; falls es angewendet wird, kommen Mengen von 2 bis 15 Gew.-Teilen, insbesondere Mengen von 5 bis 12 Gew.-Teilen, in Betracht.

Komponente B

Komponente B ist ein Pfropfmischpolymerisat, das in einem Anteil von 5 bis 50 Gew.-%, insbesondere von 10 bis 40 Gew.-%, jeweils bezogen auf die Mischung aus A und B, angewendet wird. Dieses Pfropfmischpolymerisat ist aufgebaut aus 10 bis 50 Gew.-Teilen, vorzugsweise 15 bis 45 Gew.-Teilen eines Gemisches aus mindestens einem vinylaromatischen Monomeren $b_2$), das bis zu 12 Kohlenstoffatome enthält, und 0,1 bis 25 Gew.-Teilen, vorzugsweise 5 bis 20 Gew.-Teilen mindestens eines (Meth)acrylsäureesters und/oder von Acryl-

nitril $b_3$) als Pfropfhülle, auf 50 bis 90 Gew.-Teile, insbesondere 60 bis 80 Gew.-Teile einer elastomeren Pfropfgrundlage (Kautschukkomponente) $b_1$).

Die Herstellung der Pfropfmischpolymerisate B ist an sich bekannt. Sie können z.B. hergestellt werden durch Polymerisation eines Gemisches von Styrol und Acrylnitril und/oder (Meth)acrylaten in Gegenwart eines Kautschuks.

Der Kautschuk $b_1$) soll eine Glastemperatur (nach K.H.Illers und H. Breuer, Kolloid-Zeitschrift 176, (1961) Seite 110) haben, die unter $0^{\circ}$C liegt. Als Kautschuk kommen beispielsweise in Frage:

Polybutadien (vgl. DE-OS 1 420 775 und DE-OS 1 495 089). Copolymerisate aus Butadien und Styrol (vgl. Brit. Patent 649 166), Copolymerisate aus Butadien und Styrol, Polyacrylester, die gegebenenfalls vernetzt sein können (vgl. DE-AS 1 138 921, DE-AS 1 224 485 oder DE-AS 1 260 135), sowie Copolymerisate aus Acrylsäureester und Butadien (vgl. DE-AS 1 238 207),

ferner Elastomere von Copolymerisaten aus Acrylsäureestern mit Styrol, Acrylnitril und Vinylethern und Copolymerisate aus Ethylen und einem nicht konjugierten Dien (EPDM-Kautschuke).

Die vinylaromatischen Pfropfmonomeren $b_2$) sind Styrol, $\alpha$-Methylstyrol und/oder kernalkylierte Styrole mit bis zu 12 C-Atomen; als Monomere $b_3$) kommen (Meth)acrylsäureester von Alkanolen mit bis zu 8 C-Atomen, sowie Acrylnitril oder Mischungen davon in Betracht.

0071786

Die Pfropfcopolymerisation kann dabei bekannterweise in Lösung, Suspension oder vorzugsweise in Emulsion erfolgen. Die Weichphase des Pfropfmischpolymerisats weist, bei der bevorzugten Herstellung des Kautschuks und der Pfropfung in Emulsion einen mittleren Teilchendurchmesser ($d_{50}$-Wert der integralen Masseverteilung) von $\geqq 0{,}08$ /um auf. In der Regel liegt der $d_{50}$-Wert im Bereich von 0,1 bis 0,4 /um. Die Schlagzähigkeit der erfindungsgemäßen Formmasse ist weitgehend vom Teilchendurchmesser der Weichphase unabhängig. Bei solchen Pfropfcopolymerisationen erfolgt eine zumindest teilweise chemische Verknüpfung der polymerisierenden Monomeren mit dem bereits polymerisierten Kautschuk, wobei die Verknüpfung wahrscheinlich an den im Kautschuk enthaltenen Doppelbindungen erfolgt. Zumindest ein Teil der Monomeren ist also auf den Kautschuk gepfropft. Der Teil der Monomeren, der nicht auf den Kautschuk gepfropft ist, copolymerisiert für sich. Dieses Copolymerisat kann bei den hier in Rede stehenden Gemischen der Komponente B zugerechnet werden. Man kann den Anteil der gepfropften Monomeren dadurch ermitteln, daß man den Gelgehalt der Pfropfcopolymeren bestimmt:

Das Pfropfcopolymerisat wird in einem Lösungsmittel, z.B. in Methyl-ethyl-keton gelöst; dabei lösen sich nur die nichtgepfropften, für sich allein copolymerisierten Monomeren. Die Komponente B ist für die Schlagzähigkeit der erfindungsgemäßen Formmassen verantwortlich.

Wesentlich für das Eintreten des Erfolges ist nunmehr, daß die Komponenten A und B der erfindungsgemäßen Formmasse derart aufgebaut und in der Mischung so aufeinander abgestimmt sind, daß der Absolutbetrag der Differenz der Gewichtsteile, der die Hauptmatrix bildenden Monomeren $a_2$) und gegebenenfalls $a_3$), und der das Pfropfmischpolymerisat

0071786

bildenden Monomeren $b_3$) 4 oder kleiner als 4 ist; mathematisch ausgedrückt:

$$\left| (a_2 + a_3) - (b_3) \right| \leq 4$$

## Herstellung der Formmasse

Die erfindungsgemäße Formmasse wird vorzugsweise durch Abmischen einer Schmelze der Komponente A mit der Komponente B erhalten. Dabei werden die Komponenten A und B als Schmelzen bei Temperaturen zwischen 200 und 260°C auf Extrudern, Walzen oder Knetern bei Verweilzeiten von einigen Minuten gemischt. Man kann aber auch Lösungen der Komponente A und der Hauptkomponente des Pfropfmischpolymerisates B vermischen, die Lösungsmittel anschließend entgasen und die Mischungen dann mit dem Pfropfmischpolymerisat (Weichkomponente B) vermischen.

Zusätzlich zu den Komponenten A und B können die Formmassen der vorliegenden Erfindung noch die üblichen Zusatzstoffe, wie Füllstoffe, Pigmente, Stabilisatoren und Schmiermittel in üblichen Mengen enthalten.

Es hat sich dabei überraschenderweise gezeigt, daß die erfindungsgemäß hergestellten Formmassen die bekannte hohe Wärmeformbeständigkeit von Styrol-Maleinsäureanhydrid-Copolymerisaten mit den Eigenschaften schlagzäher ABS-Polymerisate vereinigen.

Für die Herstellung der erfindungsgemäßen Formmassen wurden die in Tabelle 1 aufgeführten Copolymerisate $A_1$ bis $A_6$ und die in der Tabelle 2 genannten Pfropfkautschuke $B_1$ bis $B_9$ verwendet. Zusammensetzung und weitere Eigenschaften sind in den genannten Tabellen angegeben.

Tabelle 1

Komponenten $A_n$ der Formmasse:

| Bezeichnung | Typ des Copolymerisates+ | Zusammensetzung in Teilen | | | | Gew.-Teile $a_2 + a_3$ | Schlagzähigkeit kJ/m$^2$ | Kerbschlagzähigkeit kJ/m$^2$ | Vicat °C |
|---|---|---|---|---|---|---|---|---|---|
| | | S | MSA | AN | MMA | | | | |
| $A_1$ | S-MSA | 92 | 8 | - | - | 8 | 11,7 | 0,7 | 115 |
| $A_2$ | S-MSA | 87 | 13 | - | - | 13 | 13,8 | 0,8 | 128 |
| $A_3$ | S-MSA | 82 | 18 | | | 18 | 17,7 | 0,9 | 135 |
| $A_4$ | S-MSA | 76 | 24 | | | 24 | 19,6 | 0,8 | 146 |
| $A_5$ | S-MSA-AN | 75 | 10 | 15 | - | 25 | 13,5 | 0,9 | 128 |
| $A_6$ | S-MSA-MMA | 75 | 10 | - | 15 | 25 | 32,0 | 1,2 | 109 |

S = Styrol

MSA = Maleinsäureanhydrid

AN = Acrylnitril

MMA = Methylmethacrylat

+ alle Copolymerisate heben eine Viskositätszahl VZ von ml/g

Tabelle 2

Pfropfmischpolymerisate $B_n$

| Bezeichnung | Zusammensetzung des Kautschuks % | | | Zusammensetzung des Pfropfreises % | | | Kautschuk/Pfropfreis % | | Tg °C | mittl. Teilchengröße [μm] $d_{50}$-Wert | Gew.-Teile ($b_3$) in Pfropfreis |
|---|---|---|---|---|---|---|---|---|---|---|---|
| | Bu | BA | V1 | S | AN | MMA | | | | | |
| $B_1$ | 100 | - | - | 100 | - | - | 75 | 25 | -84 | 0,15 | 0 |
| $B_2$ | 100 | - | - | 95 | 5 | - | 75 | 25 | -83 | 0,20 | 5 |
| $B_3$ | 100 | - | - | 92 | 8 | - | 75 | 25 | -84 | 0,18 | 8 |
| $B_4$ | 100 | - | - | 88 | 12 | - | 75 | 25 | -84 | 0,18 | 12 |
| $B_5$ | 100 | - | - | 82 | 18 | - | 75 | 25 | -85 | 0,20 | 18 |
| $B_6$ | 100 | - | - | 75 | 25 | - | 75 | 25 | -83 | 0,32 | 25 |
| $B_7$ | 100 | - | - | 88 | - | 12 | 75 | 25 | -82 | 0,35 | 12 |
| $B_8$ | 27,4 | 40,6 | 32 | 88 | 12 | - | 75 | 25 | -59 | 0,15 | 12 |
| $B_9$ | - | 100 | - | 88 | 12 | - | 75 | 25 | -47 | 0,18 | 12 |

Bu = Butadien

BA = Butylacrylat

V1 = Vinylmethylether

S = Styrol

AN = Acrylnitril

MMA = Methylmethacrylat

O.Z. 0050/035320

0071786

Die in den Vergleichsversuchen genannten Parameter wurden wie folgt bestimmt:

1. Die Schlagzähigkeit und Kerbschlagzähigkeit in $(kJ/m^2)$ wurde nach DIN 53453 an spritzgegossenen Normkleinstäben bei einer Massetemperatur von 260°C gemessen.

2. Die Viskositätszahlen, VZ, in (ml/g) wurden an einer 0,5 %igen Lösung in Dimethylformamid bestimmt.

3. Der Vicat-Erweichungspunkt in °C wurde nach DIN 53460, Verfahren B, in Silikonöl bestimmt.

4. Der mittlere Teilchendurchmesser ($d_{50}$-Wert der inte-gralen Masseverteilung) wurde durch Auswertung von Elmi-Aufnahmen bestimmt.

5. Die Tg-Werte der Kautschuke wurden nach K.H. Illers und H. Breuer, Kolloid-Zeitschrift, loc.cit. bestimmt.

Die Erfindung wird nachstehend anhand von Beispielen und Vergleichsversuchen näher erläutert, wobei sich die genannten Teile und Prozente, sofern nichts anderes vermerkt ist, auf das Gewicht beziehen.

Beispiele 1 bis 13 und Versuche 1 bis 4

Die in der Tabelle 3 genannten Komponenten $A_n$ und $B_n$ wur-den in einem Fluidmischer vorgemischt und anschließend auf einem Kokneter bei etwa 220 bis 230°C unter Stickstoff innig verknetet. Die Verweilzeit betrug etwa 4 Minuten. Das dabei erhaltene Granulat wurde auf einer Einwellen-Extruder--Schnecke aufgeschmolzen und zu gleichmäßigem, für die Spritzgußverarbeitung geeignetem Granulat abgeschlagen.

0071786

In Tabelle 3 sind die Eigenschaften der Mischungen aufgeführt. Die Ergebnisse der Versuche 1 bis 4 können als verschlechterte Ausführungsformen der Erfindung angesehen werden.

Vergleichsversuche 1 bis 5

Vergleichsversuch 1

Gemäß US-PS 3 641 212 wurden 83 Teile des S-MSA-Copolymeren $A_1$ mit 17 Teilen eines Nitrilkautschuks der Zusammensetzung (28 Teile Acrylnitril, 72 Teile Polybutadien) vermischt und extrudiert. Die Endeinstellung enthielt 12 Gew.-% Polybutadien. Die Differenz zwischen der Zusammensetzung des Matrixmaterials und der polaren Komponente $b_3$) des Kautschuks betrug 20.

Vergleichsversuch 2

Gemäß Beispiel 1 der DE-OS 2 246 726 wurde ein schlagzähmodifiziertes S-MSA-Copolymerisat durch kontinuierlich Lösungspolymerisation hergestellt. Das Produkt enthielt 23 % MSA und 15 % Polybutadien.

Vergleichsversuch 3

Gemäß Beispiel 27 der DE-OS 1 949 487 wurden 50 Teile der Komponente $A_2$ mit 50 Teilen eines Pfropfkautschuks abgemischt, der durch Pfropfung von 37,5 Teilen Styrol/Acrylnitril (im Verhältnis 70 : 30) auf 62,5 Teilen eines in Emulsion polymerisierten Polybutadiens hergestellt wurde. Die Endeinstellung enthielt 31,25 Teile Kautschukkomponente.

0071786

Vergleichsversuch 4

Es wurden die gleichen Komponenten wie im Vergleichsversuch 3 abgemischt. Die Endeinstellung enthielt jedoch nur
12 % Kautschuk.

Vergleichsversuch 5

Ein ABS-Polymerisat wurde gemäß Beispiel 1, Umsetzung A,
der DE-AS 2 427 960, so hergestellt, daß der Kautschukgehalt der Endeinstellung 12 % betrug.

Tabelle 3

| Beispiel | Zusammen-setzung | Schlag-zähigkeit $[kJ/m^2]$ | Kerbschlag-zähigkeit $[kJ/m^2]$ | Vicat $[^\circ C]$ | $\lvert (a_2+a_3) - b_3 \rvert$ |
|---|---|---|---|---|---|
| 1 | 84 $A_1$ 16 $B_2$ | 37,8 | 3,5 | 110 | 3 |
| 2 | 84 $A_1$ 16 $B_3$ | k.B.[+] | 7,9 | 109 | 0 |
| 3 | 84 $A_1$ 16 $B_4$ | 31,5 | 6,0 | 110 | 4 |
| 4 | 84 $A_2$ 16 $B_4$ | k.B. | 7,3 | 118 | 1 |
| 5 | 84 $A_3$ 16 $B_5$ | k.B. | 8,1 | 127 | 0 |
| 6 | 84 $A_4$ 16 $B_6$ | k.B. | 7,8 | 138 | 1 |
| 7 | 84 $A_5$ 16 $B_6$ | k.B. | 8,4 | 119 | 0 |
| 8 | 84 $A_6$ 16 $B_6$ | k.B. | 9,3 | 105 | 0 |
| 9 | 84 $A_2$ 16 $B_7$ | k.B. | 8,7 | 115 | 1 |
| 10 | 84 $A_2$ 16 $B_8$ | 64,7 | 6,8 | 116 | 1 |
| 11 | 84 $A_2$ 16 $B_9$ | 78,7 | 7,3 | 116 | 1 |
| 12 | 75 $A_1$ 25 $B_3$ | k.B. | 12,9 | 106 | 0 |
| 13 | 75 $A_2$ 25 $B_4$ | k.B. | 15,2 | 115 | 1 |

Forts. Tabelle 3

| Versuch | Zusammensetzung | Schlagzähigkeit $[kJ/m^2]$ | Kerbschlagzähigkeit $[kJ/m^2]$ | Vicat $[^\circ C]$ | $\left|(a_2+a_3) - b_3\right|$ |
|---|---|---|---|---|---|
| 1 | 84 $A_1$<br>16 $B_5$ | 20,1 | 2,0 | 110 | 10 |
| 2 | 84 $A_2$<br>16 $B_2$ | 17,4 | 1,5 | 119 | 8 |
| 3 | 84 $A_2$<br>16 $B_6$ | 19,3 | 2,2 | 118 | 12 |
| 4 | 84 $A_1$<br>16 $B_1$ | 21,4 | 1,8 | 111 | 8 |
| Vergleichs-versuch | | | | | |
| 1 | s. Beschreibung | 24,8 | 3,0 | 100 | 20 |
| 2 | " | 42,5 | 3,9 | 106 | 0 |
| 3 | " | 58,0 | 5,3 | 106 | 17 |
| 4 | " | 19,8 | 1,9 | 117 | 17 |
| 5 | " | 48,4 | 7,8 | 99 | 5 |

[+]kein Bruch

Patentansprüche

1. Thermoplastische Formmassen, enthaltend ein Gemisch aus

A) 50 bis 95 Gew.-% mindestens eines Copolymerisates

aufgebaut aus:

a$_1$) 65 bis 95 Gew.-Teilen mindestens eines monovinylaromatischen Monomeren, das bis zu 12 Kohlenstoffatome enthält,

a$_2$) 5 bis 35 Gew.-Teilen eines ungesättigten Di-carbonsäureanhydrids,

gegebenenfalls enthaltend

a$_3$) 2 bis 15 Gew.-Teile eines acrylisch ungesättigten Monomeren.

und

B) 5 bis 50 Gew.-% mindestens eines Pfropfmischpoly-merisates
aufgebaut aus:

b$_1$) 50 bis 90 Gew.-Teilen mindestens eines Kautschuks, der eine Glastemperatur, Tg, von unterhalb 0°C aufweist,

b$_2$) 10 bis 50 Gew.-Teilen mindestens eines monovinylaromatischen Monomeren, das bis zu 12 Kohlenstoffatome enthält,

0071786

und

$b_3$) 0,1 bis 25 Gew.-Teilen mindestens eines (Meth)acrylsäureesters und/oder Acrylnitril

dadurch gekennzeichnet, daß sich die Absolutbeträge der Differenz der Gewichtsteile zwischen der Summe von $[a_2)$ und $a_3)]$ und $[b_3]$ um $\leq$ 4 unterscheiden.

2. Verfahren zur Herstellung von Formmassen gemäß Anspruch 1 durch Vereinigen der Schmelze der Komponente A mit der Komponente B.

3. Verwendung der Formmassen gemäß Anspruch 1 zur Herstellung von Formteilen.

4. Formteile aus Formmassen gemäß Anspruch 1.

Europäisches
Patentamt

**EUROPÄISCHER RECHERCHENBERICHT**

0071786

Nummer der Anmeldung

EP 82 10 6323

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,X | DE-A-1 949 487 (BASF) *Patentansprüche* | 1-4 | C 08 L 35/06 |
| X | DE-A-2 843 450 (GENERAL ELECTRIC) *Patentansprüche* | 1-4 | |
| X | DE-A-2 524 787 (GENERAL ELECTRIC) *Patentansprüche* | 1-4 | |

RECHERCHIERTE SACHGEBIETE (Int. Cl. 3)

C 08 L 35/06

Der vorliegende Recherchenbericht wurde für alle Patentansprüche erstellt.

| Recherchenort | Abschlußdatum der Recherche | Prüfer |
|---|---|---|
| DEN HAAG | 18-10-1982 | FOUQUIER J.P. |